# EUROPÄISCHE PATENTSCHRIFT

(11) **EP 0 424 726 B1**
(45) Veröffentlichungstag und Bekanntmachung des Hinweises auf die Patenterteilung: **13.09.1995**
(21) Anmeldenummer: 90119374.8
(22) Anmeldetag: 10.10.1990
(51) Int. Cl.: G06K 19/06

(54) **Chipkarte**
Chipcard
Carte de circuit

(30) Priorität: 24.10.1989 DE 3935364
(43) Veröffentlichungstag der Anmeldung: 02.05.1991
(73) Patentinhaber: Angewandte Digital Elektronik GmbH, 21521 Dassendorf (DE)
(72) Erfinder: Kreft, Hans Diedrich, W-2055 Dassendorf (DE)
(74) Vertreter: Mierswa, Klaus, Dipl.-Ing.

(56) Entgegenhaltungen:
- EP-A- 0 079 047
- EP-A- 0 268 106
- US-A- 4 746 787

## Beschreibung

Die Erfindung betrifft eine Chipkarte, bei der die Energieversorgung und der bidirektionale Datenaustausch über Kontakte bewirkt wird.

Eine derartige Karte - als tragbares Speichermedium bezeichnet - ist aus der DE 37 21 170 Al bekannt und dient als Kreditkarte zum bargeldlosen Einkauf, wobei die Daten von der Karte durch eine Lese/Einschreibeinheit aufgenommen werden.

Während diese Karte entsprechende Kontakte aufweist, ist es aus der DE 37 21 822 Cl auch bekannt, daß eine Chipkarte über kontaktlose, elektromagnetische Energie und/oder Signalübertragung mit einer stationären Schaltungsanordnung zusammenarbeitet. Die für die Übertragung vorgesehene Antennenspule ist dabei konzentrisch um die aktive Fläche des Halbleiterkörpers der integrierten Schaltung angeordnet.

Für kontaktbehaftete Chipkarten liegt eine internationale ISO-Norm 7816 vor. Parallel zu diesen kontaktbehafteten Karten werden kontaktlose Karten am Markt angeboten, bei denen die Versorgung der Chips auf der Karte mit Energie berührungslos (meist nach einem Transformatorprinzip) geschieht. Die bidirektionale Datenübertragung geschieht ebenfalls berührungslos durch Ausnutzung der unterschiedlichen Eigenschaften in den elektromagnetischen Wellen in den verschiedenen Frequenzbereichen. Auch der Datenfluß, die Datenformate sowie die Taktfrequenzen sind für die kontaktbehaftete Chipkarte genormt, so daß die Belegung des Kontaktfeldes solcher Karten an unterschiedlich ausgeführten Schreib/Lesemodulen immer gleich ist und alle Kontaktkarten in gleicher Weise gelesen und beschrieben werden und mit Energie versorgt werden.

Die am Markt befindlichen kontaktbehafteten Karten treten aufgrund der Nachteile von Kotakten (Verschleiß, Kontakwiderstände, direkte Verbindung zur Elektronik, statische Aufladung über die Kontakte, Einengung der werblichen Gestaltung der Karte aufgrund der Kontaktlage) zunehmend in Konkurrenz zu kontaktlosen Karten.

Der Erfindung liegt daher die Aufgabe zugrunde, eine Chipkarte zu schaffen, die sowohl kontaktbehaftet wie auch kontaktlos funktioniert, so daß diese ohne Dazutun des Kartenbenutzers in Verbindung mit Kontaktkartenlesern bzw. kontaktlos arbeitenden Lesern eingesetzt werden kann und automatisch selbsttätig ihre Funktionsweise (kontaktlos oder kontaktbehaftet) bestimmen.

Gelöst wird diese Aufgabe erfindungsgemäß mit den Merkmalen im Kennzeichen des Anspruchs.

Die Erfindung soll nachfolgend anhand der schematischen Darstellungen erläutert werden.

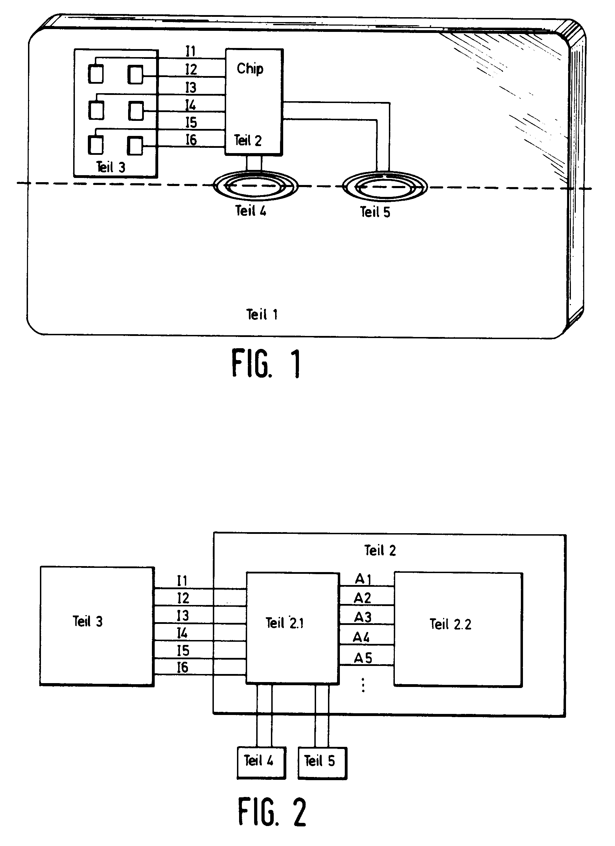

In Bild 1 ist schematisch mit dem Teil 1 eine Chipkarte abgebildet. Diese Chipkarte enthält mit dem Teil 2 den elektronischen Chip, in dem die üblichen Teile eines Mikrorechners wie Rechenwerk und Speicher, untergebracht sind. Im Teil 3 ist das Kontaktfeld dargestellt, welches gemäß ISO-Norm genau spezifiziert ist. Mit den Teilen 4 und 5 sind Spulen symbolisiert, welche zur Übertragung von Energie und bidirektionalem Datenfluß dienen. Im Teil 2 ist eine Elektronik vorhanden, welche das selbsttätige Umschalten von Spulenfunktion (Teil 4, Teil 5) auf Kontaktfunktion Teil 3 und umgekehrt ermöglicht.

In Bild 2 ist diese Umschaltelement als Teil 2.1 dargestellt. Der gesamte Chip, Teil 2, besteht also aus zwei wesentlichen Funktionselementen, dem Teil 2.1, welches die Umschaltung zwischen Kontaktfeld (Teil 3) und Spulen (Teil 4, Teil 5) vornimmt. Im Teil 2.2 befinden sich die übrigen Chipfunktionen wie Rechenwerk und Speicheransprecheinheit. In diesem Teil 2 laufen jene Vorgänge ab, welche für den Benutzer einer solchen Karte von Bedeutung sind, wie z.B. abbuchen von Geldbeträgen, Speichern von Identifizierungsnummern usw.

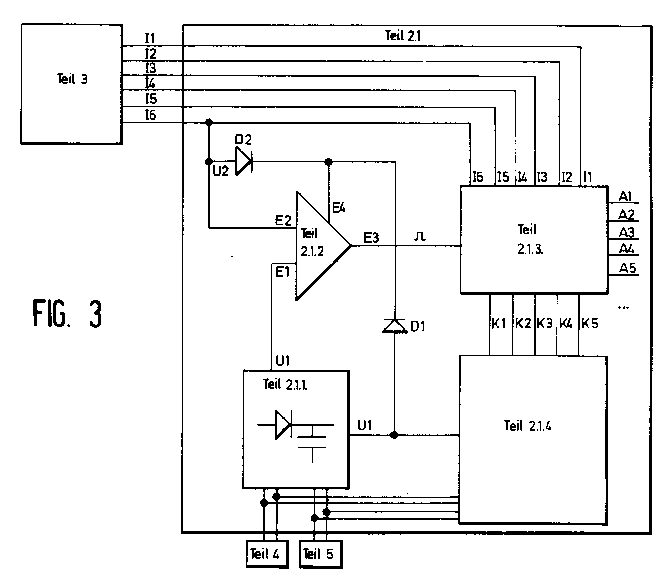

Eine weitere Aufgliederung des Teils 2.1 wird in Bild 3 dargestellt. Die Spulen (Teil 4, Teil 5) werden sowohl mit dem Teil 2.1.1. wie mit dem Teil 2.1.4. verbunden. Das Teil 2.1.1 führt eine Strom- und Spannungsgleichrichtung durch, in dem z.B. über ein Diodenkondensatornetzwerk Gleichstrom und Gleichspannung dem gesamten Teil 2 zur Verfügung gestellt werden, sofern genügend Energie über die Spulen (Teil 4, Teil 5) nach einem Transformatorprinzip zur Verfügung gestellt werden. Diese gewonnene Gleichspannung (U₁) wird über den Eingang E 1 an ein spannungsvergleichendes Element (z.B. Komparator, Operationsverstärker)hier als Teil 2.1.2. gekennzeichnet, geführt. Der andere Ausgang wird über die Diode D 1 an dasselbe Teil 2.1.2 als Spannungsversorgung geführt. Das Teil 2.1.2 liefert einen Ausgang, der über E 3 an ein Multiplexglied (Teil 2.1.3) zugeführt wird. Dieser Ausgang des Vergleichsgliedes (Teil 2.1.2) hat einen Spannungspegel, der eindeutig von dem Spannungspegel der Eingänge E1, E2 des TEiles 2.1.2 abhängt. Liegt z.B. U1 über E1 an, möge E3 einen Spannungswert anzeigen. In allen anderen Fällen, wenn z.B. E2 den Spannungswert U2 des Teiles 3 anliegen hat und falls E1 und E2 hoch sind, möge Teil 2.1.2 am Ausgang E3 jeweils den Spannungswert O haben. Damit hängt dieser Ausgang E3 vom Teil 2.1.2 ab und von der zur Verfügung gestellten Spannung U1 oder U2. Diese Spannungen werden jeweils über die Dioden D1 bzw. D2 über den Eingang E4 dem Teil 2.1.2 als Versorgungsspannung zur Verfügung gestellt. Damit erhält das Teil 2.1.3, welches als Multiplexer ausgeführt ist, eine eindeutige Information über die Herkunft der Spannungsversorgung. Teil 2.1.3 kann mit dieser Information entweder die Leitungen des Teils 3 (I1, I2, I3, I4, I5, ...) oder die Leitungen des Teils 2.1.4 (K1, K2, K3, K4, K5, ...) auf die Ausgänge (A1, A2, A3, A4, A5, ...) umschalten. Diese Leitungen (A1 bis A5 und weitere) dienen im Teil 2 dem Teil 2.2 als Ein- und Ausgangsleitung zum Verarbeiten der Informationen im Rechenwerk des Teils 2.2. Das Teil 2.1.4 dient zur Umwandlung der über die Spulen (Teil 4, Teil 5) bidirektional übertragenen Informationen auf Leitungen K1, K2, K3, K4 und K5 in einer solchen Weise, daß diese mit den Informationen I1, I2, I3, I4 und I5 des Teiles 3 voll kompatibel sind. Durch die Umschaltung des Teiles 2.1.3 ist es für ein Rechenwerk, welches im Teil 2 enthalten ist, unbedeutend, ob es sich um Informationen handelt, welche über das Kontaktfeld Teil 3 übertragen werden oder um Informationen, welche über Spulen (Teil 4, Teil 5) eingekoppelt werden.

Gemäß vorstehender Beschreibung kann somit ein Siliziumchip aufgebaut werden, welcher auf einer Chipkarte untergebracht, selbsttätig die Umschaltung zwischen Kontaktfeld als Ankopplung einer Chipkarte an die Umwelt oder auf Spulen zur kontaktlosen Energie- und Signalübertragung als Ankopplung an die Umwelt ermöglicht.

## Patentansprüche

1. Chipkarte, bei der die Energieversorgung und der bidirektionale Datenaustausch über Kontakte in einem kontaktfeld bewirkt wird,
dadurch gekennzeichnet,
- daß neben dem Kontaktfeld (Teil 3) auch noch Spulen (Teil 4, Teil 5) zur Spannungsversorgung und zum Datenaustausch vorgesehen sind,
- daß ein Dioden-Kondensatornetzwerk (Teil 2.1.1.) zur Gleichrichtung und Glättung einer in die Spulen induzierten Wechselspannung an die Spulen angeschlossen ist und eine erste Gleichspannung (U₁) erzeugt,
- daß die erste Gleichspannung (U₁) zur Spannungsversorgung des Chips (Teil 2) dient und an einen ersten Eingang (E 1) einer Diskriminierungsschaltung (Teil 2.1.2.) geführt ist,
- daß eine über das Kontaktfeld gelieferte zweite Gleichspannung (U₂) ebenfalls zur Spannungsversorgung des Chips dient und an einen zweiten Eingang (E 2) der Diskriminierungsschaltung (Teil 2.1.2.) geführt ist,
- daß die Diskriminierungsschaltung (Teil 2.1.2.) an ihrem Ausgang ein Signal (E 3) abgibt, das abhängig vom Vorliegen der ersten oder der zweiten Spannung (U₁ oder U₂) zwei verschiedene logische Pegel aufweist und das eine weitere Schaltung (Teil 2.1.3) steuert,
- daß der weiteren Schaltung (Teil 2.1.3.) über eine Leitungsreihe (I₁ bis I₆) Signale zur Spannungsversorgung und zum Datenaustausch vom Kontaktfeld her zugeführt werden, und der über eine Schaltung (Teil 2.1.4.) und eine andere Leitungsreihe (K₁ bis K₅) Signale zur Spannungsversorgung und zum Datenaustausch von den Spulen her zugeführt werden,
- daß die weitere Schaltung (Teil 2.1.3.) an ihrem Ausgang über eine Leitungsreihe (A₁ bis A₅) an den Chip (Teil 2) angeschlossen ist, und
- daß bei Vorliegen der ersten Spannung (U₁) die Signale von den Spulen und bei Vorliegen der zweiten Spannung (U₂) die Signale vom Kontaktfeld an den Chip (Teil 2) durchgeschaltet werden.

## Claims

1. Chip card wherein the energy supply and the bi-directional data exchange are effected by contacts comprising the following points:
- whereby in addition to the contact field **(Part 3)**, coils **(Part 4, Part 5)** are also intended to supply voltage and exchange data
- whereby a diode capacitor network **(Part 2.1.1)** is connected to coils for the rectification and smoothing of the alternating voltage induced in the said coils, and it also produces a first DC voltage supply
- whereby the said first DC voltage supply **(U1)** serves to supply voltage to the chip **(Part 2)** and is supplied to the first input **(E1)** of a comparator **(Part 2.1.2)**
- whereby a second DC voltage supply **(U2)**, delivered via the said contact field, also serves to provide voltage to the chip and is supplied to a second input **(E2)** of a comparator **(Part 2.1.2)**
- whereby the said comparator **(Part 2.1.2)** produces a signal at its output **(E3)**, which depending on the presence of the first or second voltage supply **(U1 or U2)**, indicates two different logical levels and directs an additional circuit **(Part 2.1.3)**
- whereby this said additional circuit **(Part 2.1.3)** is to have signals directed to it via wires **(I1 to I6)** to provide voltage supply and to exchange data from the contact field and additionally, further signals for the supply of voltage and exchange of data will be directed from the coils to the said additional circuit **(Part 2.1.4)** via said wires **(K1 to Kn**)
- whereby the said additional circuit (**Part 2.1.3**) is connected to the chip at its output via wires **A1 to A5** and
- whereby at the appearance of the said first voltage supply **(U1)** the signals from the said coils will be switched to the chip **(Part 2)** from the contact field, and at the appearance of the said second voltage supply (**U2**) the signals from the contact field will be switched to the chip **(Part 2)**.

## Revendications

1. Carte à puces, dans laquelle l'alimentation en énergie et la transmission bi-directionnelle de données sont assurées par l'intermédiaire de contacts réunis au niveau d'un panneau des contacts, caractérisée en ce que,
- à proximité du panneau des contacts (partie 3), des bobines (partie 4, partie 5) sont également prévues pour l'alimentation en tension et la transmission de données,
- un réseau de diodes-condensateurs (partie 2.1.₁) est relié aux bobines, en vue du redressement et du filtrage d'une tension alternative induite dans les bobines, et produit une première tension continue (U₁),
- la première tension continue (U₁) sert à l'alimentation en tension de la puce (partie 2), et se trouve dirigée jusqu'à une première entrée (E₁) d'un circuit de discrimination (partie 2.1.₂),
- une deuxième tension continue (U₂) délivrée par l'intermédiaire du panneau des contacts, sert éventuellement à l'alimentation en tension de la puce, et se trouve dirigée jusqu'à une deuxième entreé (E₂) du circuit de discrimination (partie 2.1.₂),
- le circuit de discrimination (partie 2.1.₂) délivre à sa sortie un signal (E₃), qui, en fonction de la présence de la première ou de la deuxième tension (U₁ ou U₂), présente deux niveaux logiques différents, et qui commande un circuit supplémentaire (partie 2.1.₃),
- des signaux pour l'alimentation en tension et pour la transmission de données sont envoyés à partir du panneau des contacts au circuit supplémentaire (partie 2.1.₃), par l'intermédiaire d'une série de liaisons électriques (I₁ à I₆), et des signaux pour l'alimentation en tension et pour la transmission de données sont envoyés à partir des bobines jusqu'à ce circuit supplémentaire par l'intermédiaire d'un circuit (partie 2.1.₄), et d'une autre série de liaisons électriques (K₁ à K₅,),
- le circuit supplémentaire (partie 2.1.₃) est relié à sa sortie à la puce (partie 2), par l'intermédiaire d'une série de liaisons électriques (A₁ à A₅), et
- en cas de présence de la première tension (U₁), les signaux provenant des bobines sont mis en communication avec la puce (partie 2), et en cas de présence de la tension (U₂), les signaux provenant du panneau des contacts sont mis en communication avec la puce (partie 2).
